(19) Europäisches Patentamt
European Patent Office
Office européen des brevets

(11) **EP 4 403 809 A1**

(12) **EUROPEAN PATENT APPLICATION**
published in accordance with Art. 153(4) EPC

(43) Date of publication:
**24.07.2024 Bulletin 2024/30**

(51) International Patent Classification (IPC):
***F16K 31/04*** *(2006.01)*

(21) Application number: **22869705.8**

(52) Cooperative Patent Classification (CPC):
**F16K 31/04;** Y02B 30/70

(22) Date of filing: **01.08.2022**

(86) International application number:
**PCT/JP2022/029468**

(87) International publication number:
**WO 2023/042557 (23.03.2023 Gazette 2023/12)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **15.09.2021 JP 2021150610**

(71) Applicant: **Fujikoki Corporation
Tokyo 158-0082 (JP)**

(72) Inventors:
• **YOSHIDA Tatsuya
Tokyo 158-0082 (JP)**
• **ARAI Yusuke
Tokyo 158-0082 (JP)**

(74) Representative: **Ter Meer Steinmeister & Partner
Patentanwälte mbB
Artur-Ladebeck-Strasse 51
33617 Bielefeld (DE)**

(54) **ELECTRIC VALVE**

(57)    [Object] To provide an electric valve capable of having a valve port with a large diameter while ensuring durability.

[Solution] An electric valve 1 includes a valve body (10) having a valve port (14), a valve member (40) facing the valve port (14), a rotor 51 rotatable with respect to the valve body (10), and a driving shaft (70) to which rotation of the rotor (51) is transmitted. When the rotation of the rotor (51) is transmitted to the driving shaft (70), the driving shaft (70) moves downward or upward. The driving shaft (70) pushes the valve member (40) when moving downward, pulls the valve member (40) when moving upward, and is rotatable with respect to the valve member (40).

FIG.2

## Description

Technical Field

The present invention relates to an electric valve.

Background Art

Patent Literature 1 discloses an example of an electric valve according to the related art. The electric valve disclosed in Patent Literature 1 includes a valve chamber, a first passage connected to the valve chamber via a valve port, a second passage connected to the valve chamber, and a valve member facing the valve port in an up-and-down direction. In the electric valve, the valve member is moved in the up-and-down direction along with rotation of a rotor. The electric valve controls the flow rate of refrigerant flowing from the first passage to the second passage and the flow rate of refrigerant flowing from the second passage to the first passage.

In the electric valve, the rotation of the rotor is transmitted to a driving shaft. The driving shaft includes an external thread. The external thread of the driving shaft is screwed into an internal thread of a guide member. When the rotor rotates in one direction, the driving shaft rotates and is moved downward by a screw-feed action. The valve member is pushed downward by the driving shaft and closes the valve port. When the rotor rotates in the other direction, the driving shaft rotates and is moved upward by the screw-feed action. The valve member is pushed upward by a valve opening spring and opens the valve port.

Citation List

Patent Literature

Patent Literature 1: Japanese Unexamined Patent Application Publication No. 2018-135908

Summary of Invention

Technical Problem

In the electric valve described above, when refrigerant pressure in the first passage is higher than refrigerant pressure in the second passage, an upward force is applied to the valve member. The driving shaft pushes the valve member downward against the upward force and against a force exerted by the valve opening spring to push the valve member upward, closing the valve port. Alternatively, when refrigerant pressure in the second passage is higher than refrigerant pressure in the first passage, a downward force is applied to the valve member. The valve opening spring pushes the valve member upward against the downward force, opening the valve port.

Increasing the diameter of the valve port effectively increases the flow rate of refrigerant flowing in the electric valve. However, since the downward force increases when the diameter of the valve port increases, it is necessary to increase the force exerted by the valve opening spring to push the valve member upward. Hereinafter, the force is referred to as "spring force". Additionally, since the upward force also increases when the diameter of the valve port increases, it is necessary to also increase the force exerted by the driving shaft to push the valve member downward against the upward force and the spring force. Consequently, forces applied to components, such as the driving shaft, increase, accelerating the wear of the components and reducing the durability of the electric valve.

In the electric valve, the driving shaft can pull the valve member upward to open the valve port by securing the valve member to the driving shaft. Thus, in the electric valve, it is unnecessary to increase the spring force even if the diameter of the valve port increases, and the wear of the components can be suppressed. However, if the valve member is secured to the driving shaft, the valve member rotates together with the driving shaft and slides on a valve seat, which encloses the valve port, in the rotational direction. This accelerates the wear of the valve member and the valve seat, reducing the durability of the electric valve.

Accordingly, it is an object of the present invention to provide an electric valve capable of having a valve port with a large diameter while ensuring durability.

Solution to Problem

To achieve the object described above, an electric valve according to the present invention includes a valve body having a valve port, a valve member facing the valve port, a rotor rotatable with respect to the valve body, and a driving shaft to which rotation of the rotor is transmitted. When the rotation of the rotor is transmitted to the driving shaft, the driving shaft moves toward or away from the valve port. The driving shaft pushes the valve member when moving toward the valve port. The driving shaft pulls the valve member when moving away from the valve port. The driving shaft is rotatable with respect to the valve member.

In the present invention, preferably, the electric valve further includes a connecting member mounted on the valve member. Preferably, one of the driving shaft and the connecting member includes a projection, and the other of the driving shaft and the connecting member includes a projection receiving portion on which the projection hooks when the driving shaft moves away from the valve port.

In the present invention, preferably, the projection hooks on the projection receiving portion and is rotatable with respect to the projection receiving portion.

In the present invention, preferably, the connecting member is mounted on the valve member and the valve member is rotatable with respect to the connecting member.

In the present invention, preferably, the connecting member includes a base portion that has a flat plate-like shape and that is mounted on the valve member, and elastic tabs that extend from a peripheral edge of the base portion toward the driving shaft and that is capable of elastically deforming in a direction away from a center of the base portion. Preferably, each of the elastic tabs includes the projection that projects toward the center of the base portion. Preferably, the projection receiving portion is disposed at a first end of the driving shaft, and the first end of the driving shaft is surrounded by the elastic tabs.

In the present invention, preferably, the electric valve further includes a connecting member mounted on the driving shaft. Preferably, one of the valve member and the connecting member includes a projection, and the other of the valve member and the connecting member includes a projection receiving portion on which the projection hooks when the connecting member moves away from the valve port together with the driving shaft.

Advantageous Effects of Invention

According to the present invention, when the rotation of the rotor is transmitted to the driving shaft, the driving shaft moves toward or away from the valve port while rotating. The driving shaft pushes the valve member when moving toward the valve port and pulls the valve member when moving away from the valve port, and the driving shaft is rotatable with respect to the valve member. In this configuration, the driving shaft pulls the valve member away from the valve port, enabling the valve port to open without relying on a valve opening spring that pushes the valve member away from the valve port. Additionally, since the driving shaft is rotatable with respect to the valve member, the driving shaft rotates with respect to the valve member when the valve member is in contact with the valve seat that encloses the valve port, inhibiting the valve member from sliding on the valve seat. As a result, it is possible that the electric valve has a valve port with a large diameter while ensuring durability.

Brief Description of Drawings

[Fig. 1] Fig. 1 is a sectional view of an electric valve according to a first embodiment of the present invention.
[Fig. 2] Fig. 2 is an enlarged sectional view of a part of the electric valve in Fig. 1.
[Fig. 3] Fig. 3 is an orthographic projection diagram of a connecting member of the electric valve in Fig. 1 with six views.
[Fig. 4] Fig. 4 is a diagram illustrating a force applied to a valve member of an electric valve according to the related art (forward-flow state).
[Fig. 5] Fig. 5 is a diagram illustrating a force applied to the valve member of the electric valve according to the related art (reverse-flow state).
[Fig. 6] Fig. 6 is a diagram illustrating a force applied to a valve member of the electric valve in Fig. 1 (forward-flow state).
[Fig. 7] Fig. 7 is a diagram illustrating a force applied to the valve member of the electric valve in Fig. 1 (reverse-flow state).
[Fig. 8] Fig. 8 is an enlarged sectional view of a part of an electric valve according to a second embodiment of the present invention.
[Fig. 9] Fig. 9 is an orthographic projection diagram of a connecting member of the electric valve in Fig. 8 with six views.

Description of Embodiments

(First Embodiment)

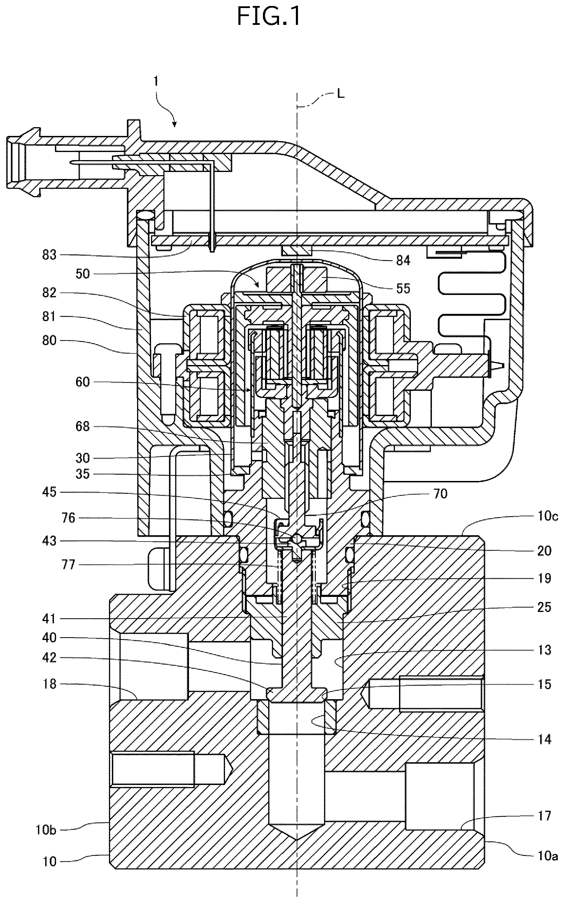

An electric valve 1 according to a first embodiment of the present invention is described below with reference to Fig. 1 to Fig. 3. The electric valve 1 according to the embodiment is used, for example, for controlling the flow rate of refrigerant in a refrigeration cycle system of an air conditioner.

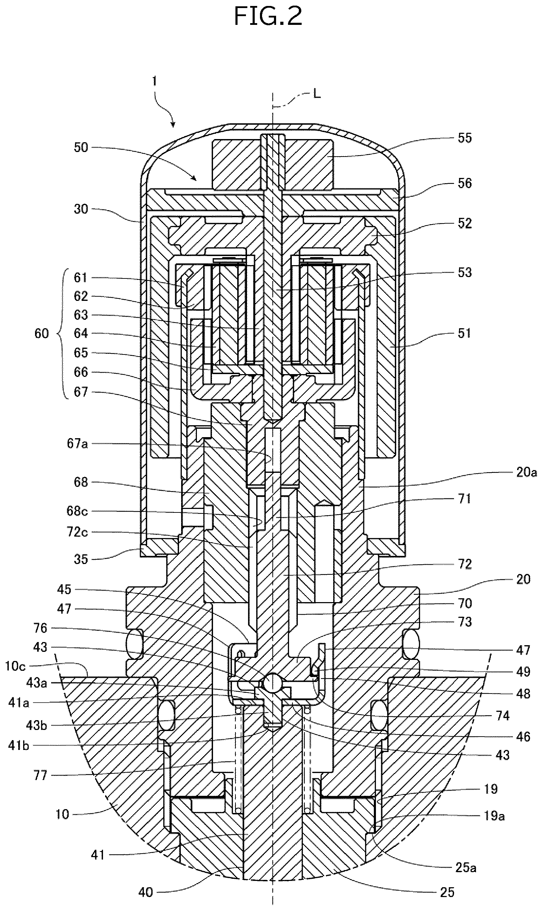

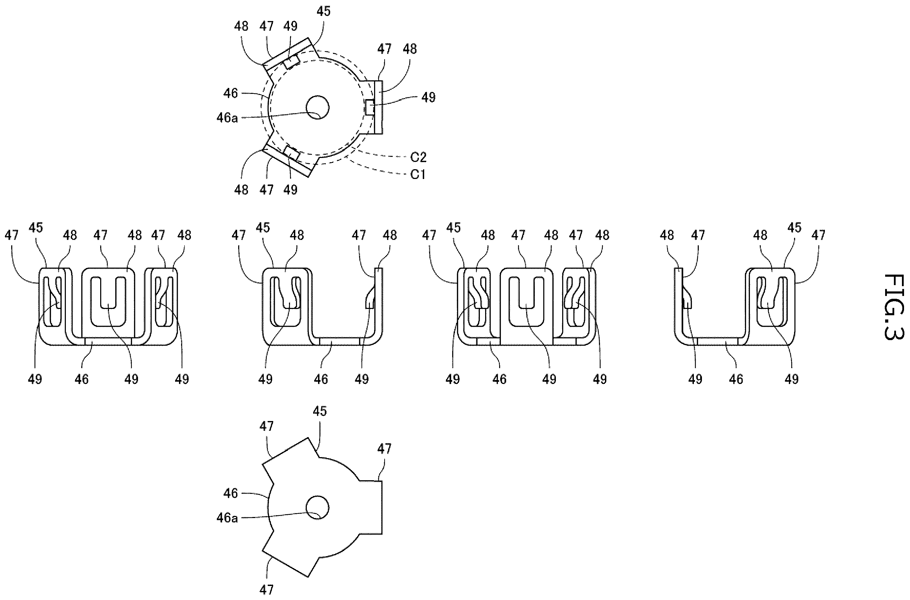

Fig. 1 is a sectional view of an electric valve according to the first embodiment of the present invention. Fig. 2 is an enlarged sectional view of a part (mainly a valve member, a connecting member, and a driving section) of the electric valve in Fig. 1. In Fig. 2, a stator unit is not illustrated. Fig. 3 is an orthographic projection diagram of the connecting member of the electric valve in Fig. 1 with six views. In Fig. 3, the upper diagram is a plan view, the lower diagram is a bottom view, and the diagram between the upper and lower diagrams is a front view. In Fig. 3, the left diagram is a left-side view, the right diagram is a back view, and the diagram adjacent to the right diagram is a right-side view.

As illustrated in Fig. 1 and Fig. 2, the electric valve 1 according to the embodiment includes a valve body 10, a holder 20, a valve-member supporting member 25, a can 30, a valve member 40, a connecting member 45, a driving section 50, and a stator unit 80.

The valve body 10 has a rectangular parallelepiped shape. The valve body 10 includes a valve chamber 13 and a valve port 14 connected to the valve chamber 13. The valve port 14 is enclosed by a valve seat 15. The valve body 10 includes a first passage 17 and a second passage 18. The first passage 17 includes a first end that is connected to the valve chamber 13 via the valve port 14 and a second end that is open on a right surface 10a of the valve body 10. The second passage 18 includes a first end that is connected to the valve chamber 13 and a second end that is open on a left surface 10b of the valve body 10. The valve body 10 has a mounting hole 19. The mounting hole 19 is located in an upper surface 10c of the valve body 10. The mounting hole 19 includes an inner circumferential surface on which an internal thread is formed. The valve chamber 13 is open to a bottom surface 19a of the mounting hole 19.

The holder 20 has a circular cylindrical shape. The holder 20 includes an outer circumferential surface on which an external thread is formed. The external thread is disposed in the lower part of the outer circumferential surface. The external thread of the holder 20 is screwed into the internal thread of the mounting hole 19 of the valve body 10. The holder 20 is mounted on the valve body 10 by a screw structure.

The valve-member supporting member 25 has a circular cylindrical shape. The valve-member supporting member 25 is disposed inside the mounting hole 19 and interposed between the valve body 10 and the holder 20. The valve-member supporting member 25 includes a lower portion press-fitted into the valve chamber 13. The valve-member supporting member 25 has an outer circumferential surface on which an annular flat surface 25a facing downward is formed. The annular flat surface 25a is in contact with the bottom surface 19a of the mounting hole 19. The valve-member supporting member 25 supports the valve member 40 to be movable in an up-and-down direction (a direction of an axis L).

The can 30 has a circular cylindrical shape. The can 30 is closed at the upper end and is open at the lower end. The lower end of the can 30 is bonded to the outer peripheral edge of a joint member 35 having a circular annular plate-like shape. The holder 20 includes an upper portion 20a disposed inside the joint member 35. The inner peripheral edge of the joint member 35 is bonded to the holder 20. The can 30 is secured to the valve body 10 via the joint member 35 and the holder 20.

The valve member 40 includes a stem 41, a valve portion 42, and a ball receiving portion 43. The stem 41 has a circular columnar shape. The stem 41 is disposed inside the valve-member supporting member 25. The stem 41 is supported by the valve-member supporting member 25 and can move in the up-and-down direction. The valve portion 42 is connected to the lower end of the stem 41. The valve portion 42 has a circular annular shape. The valve portion 42 projects radially outward from the outer circumferential surface of the stem 41. The valve portion 42 faces the valve port 14 in the up-and-down direction. The ball receiving portion 43 includes a flat plate portion 43a having a circular shape and a projecting portion 43b connected to the lower surface of the flat plate portion 43a. The flat plate portion 43a includes an upper surface on which a recess having a conical shape is formed. The projecting portion 43b is fitted into a hole 41b provided on an upper end surface 41a of the stem 41. The projecting portion 43b is secured to the stem 41. The valve portion 42 moving toward and away from the valve port 14 causes the valve member 40 to change the opening area of the valve port 14 in a stepless (including a substantially stepless) manner. The minimum area of the valve member 40 is zero (i.e., a state where the valve port 14 is closed). The minimum area of the valve port 14 may be greater than zero (i.e., a state where the valve port 14 is slightly open).

As illustrated in Fig. 3, the connecting member 45 includes a base portion 46 and elastic tabs 47. The base portion 46 has a disc shape. In the present embodiment, the connecting member 45 includes three elastic tabs 47 arranged at regular angular intervals in the circumferential direction of the base portion 46. Each of the elastic tabs 47 extends upward from the peripheral edge of the base portion 46. Each of the elastic tabs 47 includes a main portion 48 and a projection 49. The main portion 48 has a rectangular frame shape. The main portion 48 is at a right angle to the base portion 46. The lower side of the main portion 48 is connected to the peripheral edge of the base portion 46. The projection 49 has a plate-like shape with a small width and extends downward from the upper side of the main portion 48. The projection 49 is bent in an S-shape. The lower end of the projection 49 is disposed close to the center of the base portion 46 with respect to the main portion 48. The shape of the connecting member 45 has rotational symmetry with the axis of symmetry passing through the center of the base portion 46. The connecting member 45 is formed by pressing a metal plate.

The connecting member 45 is mounted on the valve member 40. Specifically, the lower surface of the base portion 46 of the connecting member 45 is in contact with the upper end surface 41a of the stem 41, and the projecting portion 43b of the ball receiving portion 43 is inserted into a through hole 46a that is provided at the center of the base portion 46. The base portion 46 is held between the upper end surface 41a of the stem 41 and the flat plate portion 43a of the ball receiving portion 43. The ball receiving portion 43 also serves as a member for mounting the connecting member 45 on the valve member 40. The connecting member 45 may be bonded to the valve member 40 by adhesive and the like.

The driving section 50 moves the valve member 40 in the up-and-down direction. The driving section 50 includes a rotor 51, a permanent magnet 55, a planetary gear mechanism 60, a guide member 68, a driving shaft 70, a ball 76, and a valve opening spring 77.

The rotor 51 has a circular cylindrical shape. The rotor 51 has an outer diameter smaller than the inner diameter of the can 30. The rotor 51 is rotatably disposed inside the can 30. The rotor 51 includes an upper end to which a connecting plate 52 is bonded. The connecting plate 52 has a circular shape and closes the upper end of the rotor 51. A rotor shaft 53 extends through the center of the connecting plate 52. The rotor 51 is connected to the rotor shaft 53 via the connecting plate 52. The rotor shaft 53 rotates together with the rotor 51.

The rotor 51 includes North (N) poles and South (S) poles. The N and S poles extend in the up-and-down direction. The N and S poles are alternately arranged in the circumferential direction on the outer circumferential surface of the rotor 51.

The permanent magnet 55 is located inside the can 30 and above the rotor 51. The permanent magnet 55 has a disc shape. The permanent magnet 55 is secured to the upper end of the rotor shaft 53. The permanent magnet 55 is disposed coaxially with the rotor 51 and rotates together with the rotor 51. A magnetic shielding member 56 having a disc shape is disposed between the rotor 51 and the permanent magnet 55. The magnetic shielding member 56 is made of soft magnetic material with relatively high permeability, such as silicon iron or similar materials. The magnetic shielding member 56 is secured to the rotor shaft 53. The magnetic shielding member 56 absorbs magnetic flux generated by the rotor 51. The magnetic shielding member 56 inhibits the magnetic field generated by the permanent magnet 55 from being distorted by the magnetic field generated by the rotor 51.

The permanent magnet 55 includes an N pole and an S pole. The permanent magnet 55 includes two parts divided by its diameter, with the N pole disposed in one of the two parts, and the S pole disposed in the other.

The planetary gear mechanism 60 is disposed inside the rotor 51. The planetary gear mechanism 60 includes a gear case 61, a fixed ring gear 62, a sun gear 63, planetary gears 64, a carrier 65, an output gear 66, and an output shaft 67. The gear case 61 has a circular cylindrical shape. The gear case 61 includes a lower end that is bonded to and coaxially with the upper portion 20a of the holder 20. The fixed ring gear 62 is an internal gear. The fixed ring gear 62 is fixed to the upper end of the gear case 61. The sun gear 63 is disposed coaxially with the connecting plate 52. The sun gear 63 is integrated with the connecting plate 52. The rotor shaft 53 extends through the sun gear 63. The sun gear 63 rotates together with the rotor 51 and the connecting plate 52. The planetary gears 64 are interposed between the fixed ring gear 62 and the sun gear 63. The carrier 65 has a disc shape. The rotor shaft 53 extends through the center of the carrier 65. The carrier 65 can rotate around the rotor shaft 53, which serves as the rotational axis. The carrier 65 supports the planetary gears 64 to be rotatable. The output gear 66 has a circular cylindrical shape with a bottom. The output gear 66 is an internal gear. The planetary gears 64 are interposed between the output gear 66 and the sun gear 63. The output shaft 67 has a circular columnar shape. The output shaft 67 has an upper portion that is press-fitted into a hole formed in the bottom of the output gear 66. The output shaft 67 has a lower portion in which a slit 67a extending in the up-and-down direction is formed. The rotational speed of the sun gear 63 is reduced by the fixed ring gear 62, the planetary gears 64, the carrier 65, and the output gear 66, and the rotation is transmitted to the output shaft 67.

The guide member 68 has a circular cylindrical shape. The guide member 68 is disposed inside the upper portion 20a of the holder 20. The guide member 68 includes an inner circumferential surface on which an internal thread 68c is formed. The internal thread 68c is disposed in the lower part of the inner circumferential surface. The output shaft 67 is disposed inside the guide member 68. The guide member 68 supports the output shaft 67 to be rotatable.

The driving shaft 70 is formed, for example, by cutting a metal pole having a circular columnar shape. The driving shaft 70 includes a first portion 71, a second portion 72, a third portion 73, and a projection receiving portion 74.

The first portion 71 has a rectangular flat plate-like shape. The first portion 71 has a thickness slightly smaller than the width of the slit 67a of the output shaft 67. The first portion 71 is disposed inside the slit 67a of the output shaft 67 and can move in the up-and-down direction. The slit 67a and the first portion 71 enable the driving shaft 70 to move in the up-and-down direction with respect to the output shaft 67 while transmitting the rotation of the output shaft 67 to the driving shaft 70.

The second portion 72 has a circular columnar shape. The second portion 72 is connected to the lower end of the first portion 71. The second portion 72 includes an outer circumferential surface on which an external thread 72c is formed. The external thread 72c is screwed into the internal thread 68c of the guide member 68. The guide member 68 may include an external thread, and the driving shaft 70 may include an internal thread.

The third portion 73 has a disc shape. The third portion 73 is connected to and coaxially with the lower end of the second portion 72. The third portion 73 has an outer diameter larger than the outer diameter of the second portion 72. The third portion 73 includes a lower surface on which a recess having a conical shape is formed, and the ball 76 is bonded to the third portion 73 at the recess. The ball 76 is in contact with the flat plate portion 43a of the ball receiving portion 43 at the recess of the flat plate portion 43a.

The projection receiving portion 74 has a circular annular shape. The projection receiving portion 74 projects radially outward from the outer circumferential surface of the third portion 73. The outer diameter of the projection receiving portion 74 is smaller than a circle C1 inscribed on each of the elastic tabs 47 of the connecting member 45 and larger than a circle C2 inscribed on each projection 49 of the connecting member 45 (Fig. 3). The third portion 73 and the projection receiving portion 74 serve as an end (a first end) of the driving shaft 70 on the valve member 40 side. The third portion 73 and the projection receiving portion 74 are disposed in a space defined by the elastic tabs 47 of the connecting member 45 and are surrounded by the elastic tabs 47. The third portion 73 faces the base portion 46 of the connecting member 45 in the up-and-down direction with a space in between. The projection receiving portion 74 is located beneath each projection 49 of the elastic tabs 47, and each projection 49 hooks on the projection receiving portion 74. Specifically, each projection 49 overlaps the projection receiving portion 74 as viewed from above, and the lower end of each projection 49 is in light contact with the projection receiving portion 74 in the up-and-down direction or is slightly spaced from the projection receiving portion 74 in the up-and-down direction. In this configuration, each projection 49 hooks on the projection receiving portion 74 and is rotatable with respect to the projection receiving portion 74. As a result, the projections 49 hook on the projection receiving portion 74 when the driving shaft 70 moves upward, and the driving shaft 70 can rotate around the axis L with respect to the connecting member 45.

The valve opening spring 77 is disposed between the valve-member supporting member 25 and the base portion 46 of the connecting member 45. The valve opening spring 77 is a compression coil spring. The valve opening spring 77 pushes the valve member 40 upward via the connecting member 45. The valve opening spring 77 may be omitted in the electric valve 1.

The stator unit 80 includes a case 81, a stator 82, and a circuit board 83. The case 81 is made of synthetic resin. The case 81 has a box shape. The case 81 houses the stator 82 and the circuit board 83. The stator 82 and the circuit board 83 is secured to the case 81 by screws. The stator 82 has a circular cylindrical shape. The can 30 is disposed inside the stator 82. The stator 82 and the rotor 51 are members of a stepping motor.

Electronic components including an angle sensor 84 are mounted on the circuit board 83. The angle sensor 84 is a magnetic angle sensor. The angle sensor 84 is mounted on the lower surface of the circuit board 83. The angle sensor 84 is located above the can 30. The angle sensor 84 faces the permanent magnet 55 in the up-and-down direction with the can 30 in between. The angle sensor 84 detects the direction and the magnitude of the magnetic field passing through the angle sensor 84. The rotational angle of the permanent magnet 55 can be obtained based on electric signals output by the angle sensor 84.

In the electric valve 1, the respective central axes of the valve port 14, the holder 20, the valve-member supporting member 25, the can 30, the valve member 40, the connecting member 45 (the base portion 46), the rotor 51, the connecting plate 52, the rotor shaft 53, the permanent magnet 55, the output shaft 67, the guide member 68, the driving shaft 70, and the stator 82 are aligned with the axis L.

Basic operation of the electric valve 1 is described below.

In the electric valve 1, a current is applied to the stator 82, rotating the rotor 51 in one direction. The rotation of the rotor 51 is transmitted to the driving shaft 70 via the planetary gear mechanism 60. When the driving shaft 70 rotates, a screw-feed action between the driving shaft 70 and the guide member 68 moves the driving shaft 70 downward. The valve member 40 is pushed downward by the driving shaft 70 and moved downward, decreasing the opening area of the valve port 14. The electric valve 1 is in a valve-closing state when the valve member 40 comes into contact with the valve seat 15 and the valve port 14 closes.

In the electric valve 1, a current is applied to the stator 82, rotating the rotor 51 in the other direction. The rotation of the rotor 51 is transmitted to the driving shaft 70 via the planetary gear mechanism 60. When the driving shaft 70 rotates, the screw-feed action between the driving shaft 70 and the guide member 68 moves the driving shaft 70 upward. The valve member 40 is pushed upward by the valve opening spring 77 and moved upward, increasing the opening area of the valve port 14. Even when the valve member 40 cannot be moved upward solely by the force of the valve opening spring 77, the projections 49 hook on the projection receiving portion 74 as the driving shaft 70 moves upward. As a result, both the connecting member 45 and the valve member 40 are moved upward. The electric valve 1 is in a valve-opening state when the valve member 40 moves away from the valve seat and the valve port 14 opens. The electric valve 1 is in a full-open state when the valve member 40 is farthest away from the valve port 14.

A method for connecting the valve member 40 and the driving shaft 70 is described below. The base portion 46 of the connecting member 45 is placed on the upper end surface 41a of the stem 41 of the valve member 40. The connecting member 45 is mounted on the valve member 40 by inserting the projecting portion 43b of the ball receiving portion 43 into the through hole 46a of the base portion 46 and fitting the projecting portion 43b into the hole 41b of the valve member 40. The first end (the third portion 73 and the projection receiving portion 74) of the driving shaft 70 is inserted inside the elastic tabs 47 of the connecting member 45, and the projection receiving portion 74 is brought into contact with each projection 49 of the elastic tabs 47. The insertion of the first end of the driving shaft 70 is progressed, and the elastic tabs 47 are elastically deformed in a direction away from the center of the base portion 46 by the projection receiving portion 74 pushing the projections 49. Then, the elastic tabs 47 are restored when the projection receiving portion 74 passes over the projections 49. As a result, the ball 76 bonded to the driving shaft 70 comes into contact with the ball receiving portion 43, each projection 49 of the elastic tabs 47 hooks on the projection receiving portion 74, and the connecting member 45 connects the valve member 40 and the driving shaft 70. In assembling the electric valve 1, the first end of the driving shaft 70 may be inserted inside the elastic tabs of the connecting member 45 by operating the stepping motor to move the driving shaft 70 toward the valve member 40 by the screw-feed action.

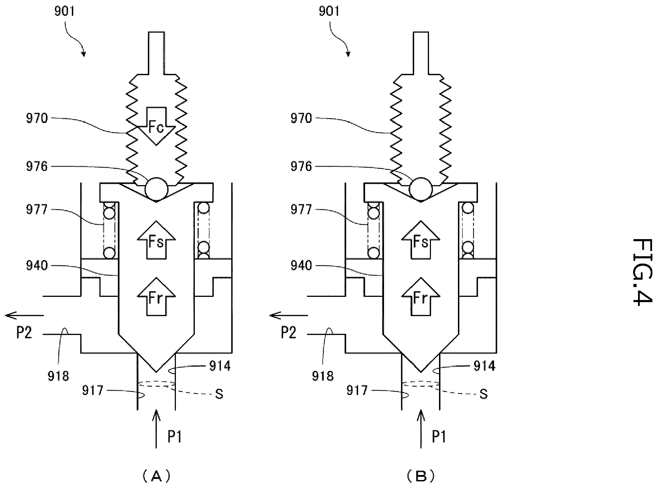

Operation of an electric valve 901 according to the related art and operation of the electric valve 1 are described below with reference to Fig. 4 to Fig. 7.

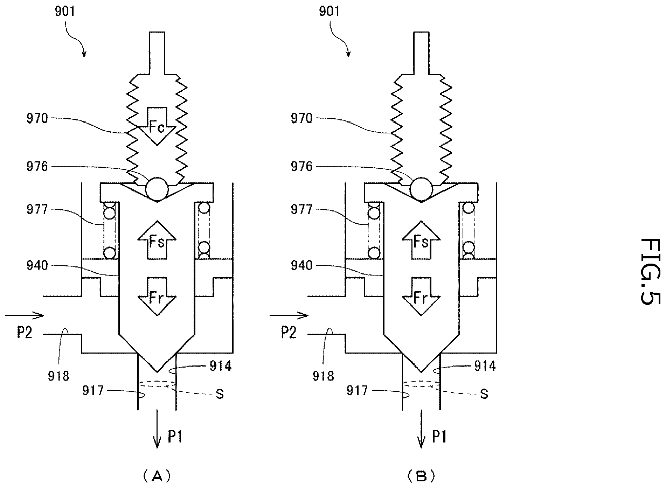

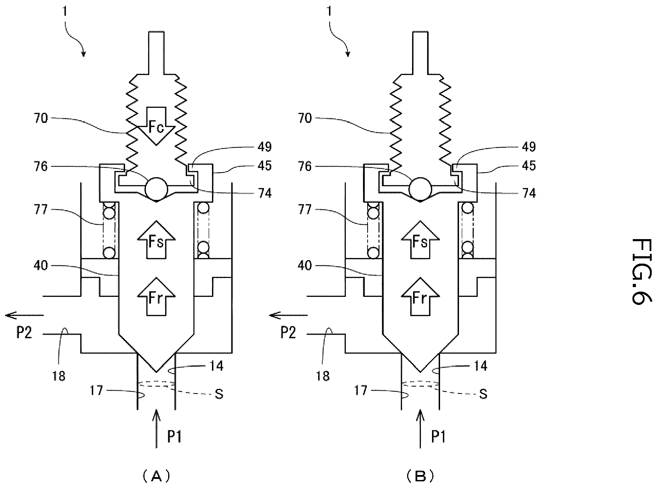

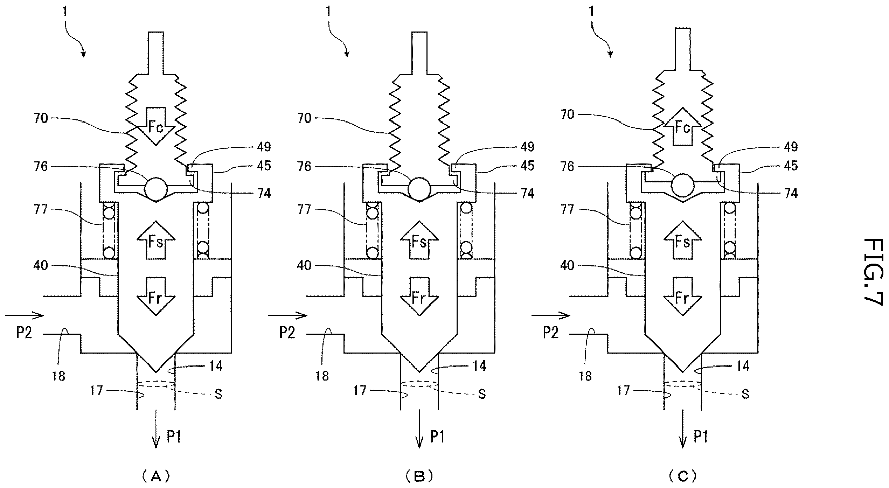

Fig. 4 and Fig. 5 are diagrams illustrating forces applied to a valve member of an electric valve according to the related art. Fig. 6 and Fig. 7 are diagrams illustrating forces applied to the valve member of the electric valve in Fig. 1. Fig. 4 and Fig. 6 illustrate a forward-flow state where refrigerant flows from a first passage to a second passage. In the forward-flow state, refrigerant pressure P1 in the first passage is higher than refrigerant pressure P2 in the second passage. Fig. 5 and Fig. 7 illustrate a reverse-flow state where refrigerant flows from the second passage to the first passage. In the reverse-flow state, refrigerant pressure P2 in the second passage is higher than refrigerant pressure P1 in the first passage. Fig. 4A, Fig. 5A, Fig. 6A, and Fig. 7A illustrate a state where a driving shaft pushes a valve member downward. Fig. 4B, Fig. 5B, Fig. 6B, and Fig. 7B illustrate a state where the driving shaft is at rest. Fig. 7C illustrates a state where the driving shaft moves upward. In Fig. 4 to Fig. 7, each component is schematically illustrated. In Fig. 4 to Fig. 7, arrows in thin lines schematically represent refrigerant flow.

Fig. 4A illustrates the electric valve 901 in the forward-flow state, and a driving shaft 970 pushes a valve member 940 downward by applying force Fc via a ball 976. The valve member 940 receives force Fs exerted by a valve opening spring 977 to push the valve member 940 upward and receives force Fr exerted upward by refrigerant. In the forward-flow state, the magnitude of force Fr is determined by the differential pressure between refrigerant pressure P1 in a first passage 917 and refrigerant pressure P2 in a second passage 918 multiplied by passage area S of a valve port 914 (Fr = (P1 - P2) × S). Thus, the valve member 940 can be moved downward to close the valve port 914 when expression (1) below is satisfied in the electric valve 901. In each expression below, Fc, Fs, and Fr represent the magnitude of the respective forces. On the left side of each expression, a term with a positive sign (+) or no sign represents downward force, and a term with a negative sign (-) represents upward force. On the right side of each expression, a term with a positive sign (+) or no sign represents upward force, and a term with a negative sign (-) represents downward force.

$$Fc > Fs + Fr \quad (1)$$

Fig. 4B illustrates the electric valve 901 in the forward-flow state, with the driving shaft 970 at rest. The valve member 940 receives force Fs exerted by the valve opening spring 977 to push the valve member 940 upward and receives force Fr exerted upward by refrigerant. Since force Fs and force Fr are upward forces, expression (2) below is satisfied. Thus, in the electric valve 901, the driving shaft 970 receives a combined force of force Fs and force Fr while the driving shaft 970 is at rest. The combined force can move the valve member 940 upward to open the valve port 914 when the driving shaft 970 moves upward.

$$0 < Fs + Fr \quad (2)$$

Fig. 5A illustrates the electric valve 901 in the reverse-flow state, and the driving shaft 970 pushes the valve member 940 downward by applying force Fc via the ball 976. The valve member 940 receives force Fs exerted by the valve opening spring 977 to push the valve member 940 upward and receives force Fr exerted downward by refrigerant. In the reverse-flow state, the magnitude of force Fr is determined by the differential pressure between refrigerant pressure P2 in the second passage 918 and refrigerant pressure P1 in the first passage 917 multiplied by passage area S of the valve port 914 (Fr = (P2 - P1) × S). Thus, the valve member 940 can be moved downward to close the valve port 914 when expression (3) below is satisfied in the electric valve 901.

$$Fc > Fs - Fr \quad (3)$$

Fig. 5B illustrates the electric valve 901 in the reverse-flow state, with the driving shaft 970 at rest. The valve member 940 receives force Fs exerted by the valve opening spring 977 to push the valve member 940 upward and receives force Fr exerted downward by refrigerant. Thus, when expression (4) below is satisfied in the electric valve 901, the driving shaft 970 receives a force equal to force Fs minus force Fr while the driving shaft 970 is at rest. This force can move the valve member 940 upward to open the valve port 914 when the driving shaft 970 moves upward.

$$0 < Fs - Fr \quad (4)$$

In the electric valve 901 in the reverse-flow state, when force Fs exerted by the valve opening spring 977 to push the valve member 940 upward is greater than force Fr exerted downward by refrigerant, as represented by expression (4), the valve opening spring 977 can move the valve member 940 upward. Since force Fr is proportional to passage area S of the valve port 914, when the diameter of the valve port 914 increases, it is necessary that the valve opening spring 977 be capable of exerting force Fs, which is greater than force Fr, on the valve member 940. Additionally, when force Fs increases, it is necessary to increase force Fc exerted by the driving shaft 970 to push the valve member 940 downward. This increases forces applied to each component.

Fig. 6A illustrates the electric valve 1 in the forward-flow state, and the driving shaft 70 pushes the valve member 40 downward by applying force Fc via the ball 76. The valve member 40 receives force Fs exerted by the valve opening spring 77 to push the valve member 40 upward and receives force Fr exerted upward by refrigerant. In the forward-flow state, the magnitude of force Fr is determined by the differential pressure between refrigerant pressure P1 in the first passage 17 and refrigerant pressure P2 in the second passage 18 multiplied by passage area S of the valve port 14 (Fr = (P1 - P2) × S). Thus, the valve member 40 can be moved downward to close the valve port 14 when expression (1) above is satisfied in the electric valve 1.

Fig. 6B illustrates the electric valve 1 in the forward-flow state, with the driving shaft 70 at rest. The valve member 40 receives force Fs exerted by the valve opening spring 77 to push the valve member 40 upward and receives force Fr exerted upward by refrigerant. Since force Fs and force Fr are upward forces, expression (2) above is satisfied. Thus, in the electric valve 1, the driving shaft 70 receives a combined force of force Fs and force Fr while the driving shaft 70 is at rest. The combined force can move the valve member 40 upward to open the valve port 14 when the driving shaft 70 moves upward.

Fig. 7A illustrates the electric valve 1 in the reverse-flow state, and the driving shaft 70 pushes the valve member 40 downward by applying force Fc via the ball 76. The valve member 40 receives force Fs exerted by the valve opening spring 77 to push the valve member 40 upward and receives force Fr exerted downward by refrigerant. In the reverse-flow state, the magnitude of force Fr is determined by the differential pressure between refrigerant pressure P2 in the second passage 18 and refrigerant pressure P1 in the first passage 17 multiplied by passage area S of the valve port 14 (Fr = (P2 - P1) × S). Thus, the valve member 40 can be moved downward to close the valve port 14 when expression (3) above is satisfied in the electric valve 1.

Fig. 7B illustrates the electric valve 1 in the reverse-flow state, with the driving shaft 70 at rest. The valve member 40 receives force Fs exerted by the valve opening spring 77 to push the valve member 40 upward and receives force Fr exerted downward by refrigerant. Thus, when expression (4) above is satisfied in the electric valve 1, the driving shaft 70 receives a force equal to force Fs minus force Fr while the driving shaft 70 is at rest. This force can move the valve member 40 upward to open the valve port 14 when the driving shaft 70 moves upward.

Even when expression (4) above is not satisfied in the electric valve 1 in the reverse-flow state, the projections 49 hook on the projection receiving portion 74, as illustrated in Fig. 7C, when the driving shaft 70 moves upward. This applies force Fc exerted by the driving shaft 70 to pull upward to the connecting member 45 and the valve member 40. Thus, the valve member 40 can be moved upward to open the valve port 14 when expression (5) below is satisfied and the driving shaft 70 moves upward. As a result, if the diameter of the valve port 14 of the electric valve 1 increases, the valve port 14 can be opened by increasing force Fc, and it is unnecessary to increase force Fs exerted by the valve opening spring 77 to push the valve member 40 upward.

$$0 < Fs - Fr + Fc \quad (5)$$

As described above, the electric valve 1 includes the valve body 10 having the valve port 14, the valve member 40 facing the valve port 14, the rotor 51 rotatable with respect to the valve body 10, and the driving shaft 70 to which the rotation of the rotor 51 is transmitted. When the rotation of the rotor 51 is transmitted to the driving shaft 70, the driving shaft 70 moves downward (direction toward the valve port 14) or upward (direction away from the valve port 14). The driving shaft 70 pushes the valve member 40 when moving downward and pulls the valve member 40 when moving upward. The driving shaft 70 is rotatable with respect to the valve member 40. In this configuration, the driving shaft 70 pulls the valve member 40 upward, enabling the valve port 14 to open without relying on the valve opening spring 77. Additionally, since the driving shaft 70 is rotatable with respect to the valve member 40, the driving shaft 70 rotates with respect to the valve member 40 when the valve member 40 is in contact with the valve seat 15, inhibiting the valve member 40 from sliding on the valve seat 15. As a result, it is possible that the electric valve 1 has the valve port 14 with a large diameter while ensuring durability.

The electric valve 1 includes the connecting member 45 mounted on the valve member 40. The connecting member 45 includes projections 49. The driving shaft 70 includes the projection receiving portion 74 on which the projections 49 hook when the driving shaft 70 moves upward. The projections 49 hook on the projection receiving portion 74 and are rotatable with respect to the projection receiving portion 74. In this configuration, the valve member 40 and the driving shaft 70 can be connected so that the driving shaft 70 pushes the valve member 40 when moving downward, pulls the valve member 40 when moving upward, and is rotatable with respect to the valve member 40, in a comparatively simple configuration. The connecting member 45 may be mounted on the valve member 40 and the valve member 40 may be rotatable with respect to the connecting member 45. In this configuration, for example, the space between the upper end surface 41a of the stem 41 of the valve member 40 and the flat plate portion 43a of the ball receiving portion 43 is slightly larger than the thickness of the base portion 46 of the connecting member 45.

The connecting member 45 includes the base portion 46 that has a flat plate-like shape and that is mounted on the valve member 40 and the elastic tabs 47 that extend from the peripheral edge of the base portion 46 toward the driving shaft 70 and that is capable of elastically deforming in the direction away from the center of the base portion 46. Each of the elastic tabs 47 includes a projection 49 that projects toward the center of the base portion 46. The projection receiving portion 74 is disposed at the end (the first end) of the driving shaft 70 on the valve member 40 side. The first end of the driving shaft 70 is surrounded by the elastic tabs 47. In this configuration, the projection 49 can hook on the projection receiving portion 74 by elastically deforming the elastic tabs 47 in the direction away from the center of the base portion 46, placing the first end (the third portion 73 and the projection receiving portion 74) of the driving shaft 70 so as to be surrounded by the elastic tabs 47, and restoring the elastic tabs 47. As a result, the valve member 40 and the driving shaft 70 can be connected by the connecting member 45 in a comparatively simple configuration.

In the electric valve 1 described above, the connecting member includes the projection, and the driving shaft includes the projection receiving portion. However, the connecting member may include the projection receiving portion, and the driving shaft may include the projection. In the electric valve 1, the connecting member is mounted on the valve member. However, the connecting member may be mounted on the driving shaft. In this configuration, one of the valve member and the connecting member includes the projection, and the other of the valve member and the connecting member includes the projection receiving portion on which the projection hooks when the connecting member moves away from the valve port together with the driving shaft.

(Second Embodiment)

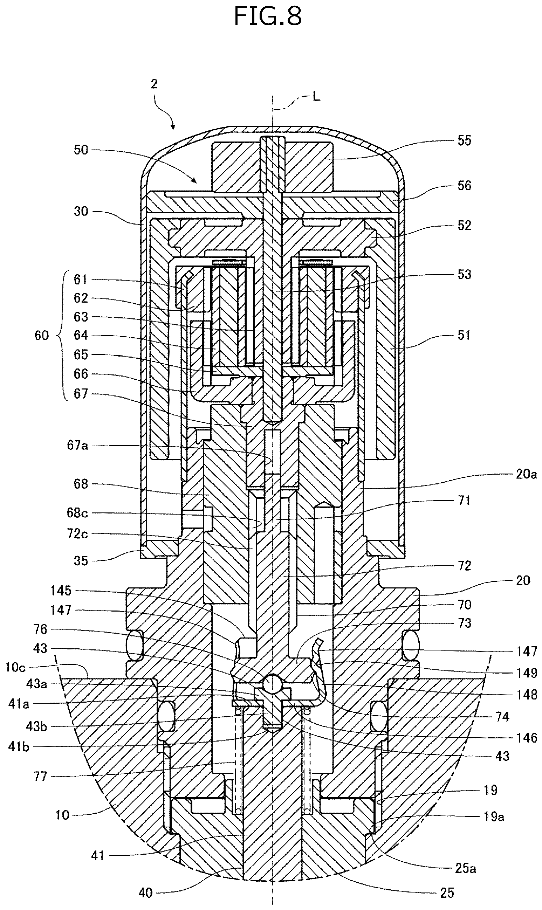

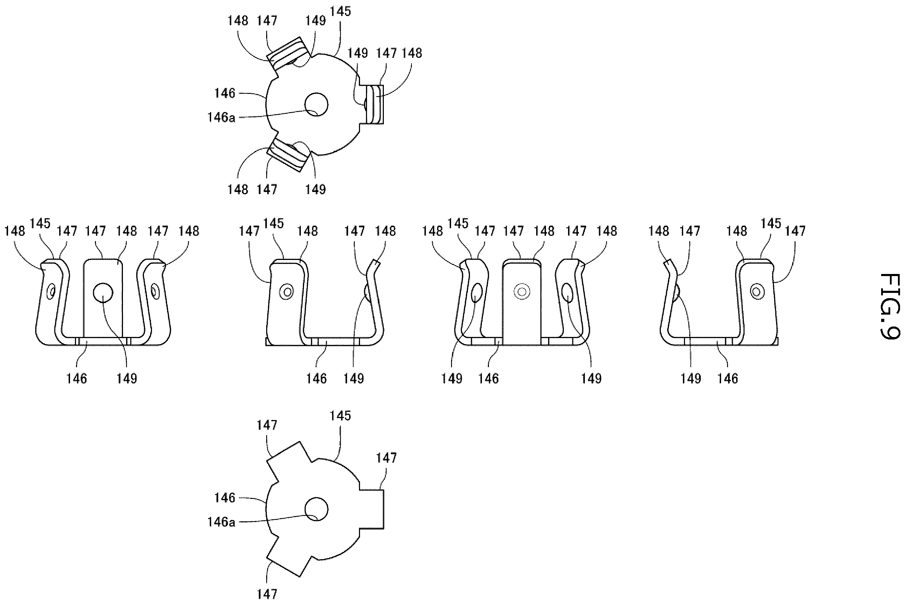

An electric valve 2 according to a second embodiment of the present invention is described below with reference to Fig. 8 and Fig. 9.

Fig. 8 is an enlarged sectional view of a part (mainly a valve member, a connecting member, and a driving section) of an electric valve according to the second embodiment of the present invention. In Fig. 8, a stator unit is not illustrated. Fig. 9 is an orthographic projection diagram of a connecting member of the electric valve in Fig. 8 with six views. In Fig. 9, the upper diagram is a plan view, the lower diagram is a bottom view, and the diagram between the upper and lower diagrams is a front view. In Fig. 9, the left diagram is a left-side view, the right diagram is a back view, and the diagram adjacent to the right diagram is a right-side view.

The electric valve 2 has the same (including substantially the same) configuration as that of the electric valve 1 described above except that the electric valve 2 includes, instead of the connecting member 45, a connecting member 145 having a different configuration from the connecting member 45. Thus, in the description of the electric valve 2, elements having the same configuration as those of the electric valve 1 are denoted by the same reference signs as those of the electric valve 1, and detailed descriptions of these elements are omitted.

The connecting member 145 includes a base portion 146 and elastic tabs 147. The base portion 146 has a disc shape. In the embodiment, the connecting member 145 includes three elastic tabs 147 arranged at regular angular intervals in the circumferential direction of the base portion 146. Each of the elastic tabs 147 extends upward from the peripheral edge of the base portion 146. Each of the elastic tabs 147 includes a main portion 148 and a projection 149. The main portion 148 has a rectangular plate-like shape. The main portion 148 is bent in an S-shape. The lower end of the main portion 148 is connected to the peripheral edge of the base portion 146. The upper end of the main portion 148 points away from the center of the base portion 146. The projection 149 has a hemispherical shape. The projection 149 projects toward the center of the base portion 146 with respect to the main portion 148. The shape of the connecting member 145 has rotational symmetry with the axis of symmetry passing through the center of the base portion 146. The connecting member 145 is formed by pressing a metal plate.

The connecting member 145 is mounted on a valve member 40. Specifically, the lower surface of the base portion 146 of the connecting member 145 is in contact with an upper end surface 41a of a stem 41, and a projecting portion 43b of a ball receiving portion 43 is inserted into a through hole 146a that is provided at the center of the base portion 146. The base portion 146 is held between the upper end surface 41a of the stem 41 and a flat plate portion 43a of the ball receiving portion 43. The ball receiving portion 43 also serves as a member for mounting the connecting member 145 on the valve member 40.

A first end of a driving shaft 70 (a third portion 73 and a projection receiving portion 74) is disposed in a space defined by the elastic tabs 147 of the connecting member 145 and is surrounded by the elastic tabs 147. The third portion 73 faces the base portion 146 in an up-and-down direction with a space in between. The projection receiving portion 74 is located beneath each projection 149 of the elastic tabs 147, and each projection 149 hooks on the projection receiving portion 74. Specifically, each projection 149 overlaps the projection receiving portion 74 as viewed from above, and each projection 149 is in light contact with the projection receiving portion 74 in the up-and-down direction or is slightly spaced from the projection receiving portion 74 in the up-and-down direction. As a result, the projections 149 hook on the projection receiving portion 74 when the driving shaft 70 moves upward, and the driving shaft 70 can rotate around an axis L with respect to the connecting member 145.

The electric valve 2 also has the same (including substantially the same) functions and effects as those of the electric valve 1 described above.

In this specification, terms indicating shapes, such as "circular cylindrical", "circular columnar", and "rectangular parallelepiped", are also used for members and portions of the members substantially having the shapes indicated by the terms. For example, "a circular cylindrical member" includes a circular cylindrical member and a substantially circular cylindrical member.

The embodiments of the present invention are described above. The present invention, however, is not limited to configurations of these embodiments. Embodiments obtained by a person skilled in the art appropriately adding, removing, or modifying components according to the embodiments described above, and an embodiment obtained by appropriately combining features of the embodiment are included in the scope of the present invention without departing from the spirit of the present invention. Reference Signs List

1,2 ... electric valve, 10 ... valve body, 10a ... right surface, 10b ... left surface, 10c ... upper surface, 13 ... valve chamber, 14 ... valve port, 15 ... valve seat, 17 ... first passage, 18 ... second passage, 19 ... mounting hole, 19a ... bottom surface, 20 ... holder, 20a ... upper portion, 25 ... valve-member supporting member, 25a ... annular flat surface, 30 ... can, 35 ... joint member, 40 ... valve member, 41 ... stem, 41a ... upper end surface, 41b ... hole, 42 ... valve portion, 43 ... ball receiving portion, 43a ... flat plate portion, 43b ... projecting portion, 45 ... connecting member, 46 ... base portion, 46a ... through hole, 47 ... elastic tab, 48 ... main portion, 49 ... projection, 50 ... driving section, 51 ... rotor, 52 ... connecting plate, 53 ... rotor shaft, 55 ... permanent magnet, 56 ... magnetic shielding member, 60 ... planetary gear mechanism, 61 ... gear case, 62 ... fixed ring gear, 63 ... sun gear, 64 ... planetary gear, 65 ... carrier, 66 ... output gear, 67 ... output shaft, 67a ... slit, 68 ... guide member, 68c ... internal thread, 70 ... driving shaft, 71 ... first portion, 72 ... second portion, 72c ... external thread, 73 ... third portion, 74 ... projection receiving portion, 76 ... ball, 77 ... valve opening spring, 80 ... stator unit, 81 ... case, 82 ... stator, 83 ... circuit board, 84 ... angle sensor, 145 ... connecting member, 146 ... base portion, 146a ... through hole, 147 ... elastic tab, 148 ... main portion, 149 ... projection, 901 ... electric valve, 914 ... valve port, 917 ... first passage, 918 ... second passage, 940 ... valve member, 970 ... driving shaft, 977 ... valve opening spring

**Claims**

1. An electric valve comprising:

    a valve body having a valve port;
    a valve member facing the valve port;
    a rotor rotatable with respect to the valve body; and
    a driving shaft to which rotation of the rotor is transmitted,
    wherein when the rotation of the rotor is transmitted to the driving shaft, the driving shaft moves toward or away from the valve port, and
    wherein the driving shaft pushes the valve member when moving toward the valve port,
    the driving shaft pulls the valve member when moving away from the valve port, and
    the driving shaft is rotatable with respect to the valve member.

2. The electric valve according to Claim 1, further comprising:

    a connecting member mounted on the valve member,
    wherein one of the driving shaft and the connecting member includes a projection, and
    wherein the other of the driving shaft and the connecting member includes a projection receiving portion on which the projection hooks when the driving shaft moves away from the valve port.

3. The electric valve according to Claim 2, wherein the projection hooks on the projection receiving portion and is rotatable with respect to the projection receiving portion.

4. The electric valve according to Claim 2, wherein the connecting member is mounted on the valve member and the valve member is rotatable with respect to the connecting member.

5. The electric valve according to Claim 2 to Claim 4,

    wherein the connecting member includes a base portion that has a flat plate-like shape and that is mounted on the valve member, and elastic tabs that extend from a peripheral edge of the base portion toward the driving shaft and that is capable of elastically deforming in a direction away from a center of the base portion,
    wherein each of the elastic tabs includes the projection that projects toward the center of the base portion,
    wherein the projection receiving portion is disposed at a first end of the driving shaft, and
    wherein the first end of the driving shaft is surrounded by the elastic tabs.

6. The electric valve according to Claim 1, further comprising:

    a connecting member mounted on the driving shaft,
    wherein one of the valve member and the connecting member includes a projection, and
    wherein the other of the valve member and the connecting member includes a projection receiving portion on which the projection hooks when the connecting member moves away from the valve port together with the driving shaft.

# FIG.1

# FIG.2

# FIG.3

# FIG.4

# FIG.5

# FIG.6

# FIG.7

# FIG.8

# FIG.9

## INTERNATIONAL SEARCH REPORT

International application No.

**PCT/JP2022/029468**

### A.   CLASSIFICATION OF SUBJECT MATTER

*F16K 31/04*(2006.01)i
FI:   F16K31/04 Z

According to International Patent Classification (IPC) or to both national classification and IPC

### B.   FIELDS SEARCHED

Minimum documentation searched (classification system followed by classification symbols)

F16K31/04

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C.   DOCUMENTS CONSIDERED TO BE RELEVANT

| Category* | Citation of document, with indication, where appropriate, of the relevant passages | Relevant to claim No. |
|---|---|---|
| X | JP 2019-128036 A (FUJI KOKI CORP.) 01 August 2019 (2019-08-01) fig. 1, 3 | 1-4, 6 |
| A | | 5 |
| P, A | JP 2021-148280 A (FUJI KOKI CORP.) 27 September 2021 (2021-09-27) paragraph [0034] | 1-6 |

☐ Further documents are listed in the continuation of Box C.     ☑ See patent family annex.

| | |
|---|---|
| *    Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| **10 August 2022** | **30 August 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

International application No.

**PCT/JP2022/029468**

| Patent document cited in search report | | | Publication date (day/month/year) | Patent family member(s) | | | Publication date (day/month/year) |
|---|---|---|---|---|---|---|---|
| JP | 2019-128036 | A | 01 August 2019 | CN fig. 1, 3 | 111173981 | A | |
| JP | 2021-148280 | A | 27 September 2021 | (Family: none) | | | |

Form PCT/ISA/210 (patent family annex) (January 2015)

**REFERENCES CITED IN THE DESCRIPTION**

**Patent documents cited in the description**

- JP 2018135908 A